# EUROPEAN PATENT SPECIFICATION

(11) **EP 2 297 949 B1**
(45) Date of publication and mention of the grant of the patent: **21.12.2011**
(21) Application number: 09772989.1
(22) Date of filing: 29.06.2009
(51) Int. Cl.: H04N 7/16, H04L 29/06, H04N 7/173

(54) **IPTV CONTENT SHARING IN IMS NETWORK**
GEMEINSAME NUTZUNG VON IPTV-INHALTEN IN EINEM IMS-NETZWERK
PARTAGE DE CONTENU IPTV DANS UN RÉSEAU IMS

(30) Priority: 02.07.2008 US 166896
(43) Date of publication of application: 23.03.2011
(73) Proprietor: Telefonaktiebolaget L M Ericsson (publ), 164 83 Stockholm (SE)
(72) Inventor: FOTI, George, Dollard des Ormeaux Québec H9G 2Z8 (CA)
(74) Representative: HOFFMANN EITLE
(86) International application number: PCT/IB2009/052814
(87) International publication number: WO 2010/001329

(56) References cited:
- WO-A1-2008/037215
- "Telecommunications and Internet converged Services and Protocols for Advanced Networking (TISPAN); IMS-based IPTV stage 3 specification; ETSI TS 183 063" ETSI STANDARD, EUROPEAN TELECOMMUNICATIONS STANDARDS INSTITUTE (ETSI), SOPHIA ANTIPOLIS CEDEX, FRANCE, no. V2.1.0, 1 June 2008 (2008-06-01), XP014042247

## Description

### FIELD OF THE INVENTION

The present invention relates generally to communication networks, and in particular to a method of sharing an IPTV session in an IMS network.

### BACKGROUND

Internet Protocol Television (IPTV) describes various protocols whereby digital television service is delivered using Internet Protocol over a network infrastructure. One such network, increasingly deployed to provide 3G wireless communications services to mobile subscribers, is the IF Multimedia. Subsystem (IMS). IMS uses known protocols, such as Session Initiation Protocol (SIP), to provide for easy integration with existing data networks, such as the Internet.

IPTV distribution to one or more individual users, such as via an IPTV Control Server and IPTV Terminal Function (ITF), is known in the art. Often, a user watching television content via an IPTV session may desire to share the program with a friend, who does not have access to the same content. The two users may then discuss the content they are both viewing (e.g., discuss plays in a sports game, or the like). Even if both users have access to IMS networks, there is currently no straightforward way to share an IPTV distribution.
From WO 2008/037215 A1 a method for enabling an IP multimedia subsystem (IMS) terminal to access an existing IPTV service is known, wherein a service gateway receives a service request from a user equipment of the IMS. A protocol conversion towards the service request is performed, and the converted service request is transmitted to an existing IPTV system. A service response received from the existing IPTV system is protocol converted. The converted service response is sent to the IMS UE. A streaming server within the existing IPTV system then sends a media stream to the IMS UE.

### SUMMARY

According to one or more embodiments described herein, a Content Sharing Application Server (AS) facilitates the sharing of IPTV content distribution sessions between users. A first user's request to share an ongoing IPTV session is routed to the Content Sharing AS, with a SIP URI of a second user with whom to share the content, identification of the desired content, and the Mcast address of the IPTV session. The Content Sharing AS joints the IGMP session group and sends the first user a SIP URI for the content and a unique authentication token. The first user sends the SIP URI for the content and token to the second user, such as via a SMS message. The second user may then send a SIP INVITE message toward the URI, which the IMS system routes to the Content Sharing AS. The second user provides the authentication token, which the Content Sharing AS uses to authenticate the second user. If the authentication is successful, the Content Sharing AS then shares the IPTV content with the second user, at which point the first and second users are both viewing the same content.

### BRIEF DESCRIPTION OF THE DRAWINGS

Figure 1 is a call flow diagram of a first user establishing an IPTV session and requesting that a second user share it.

Figure 2 is a call flow diagram of a second user joining the first user's IPTV- session.

Figure 3 is a functional block diagram of a Content Sharing AS in an IMS network.

### DETAILED DESCRIPTION

According to one or more embodiments of the present invention, a user engaged in an IPTV session may invite another user to join, or share, the content distribution session. One embodiment accomplishing this is described herein with respect to the call flow diagrams of Figures I and 2.

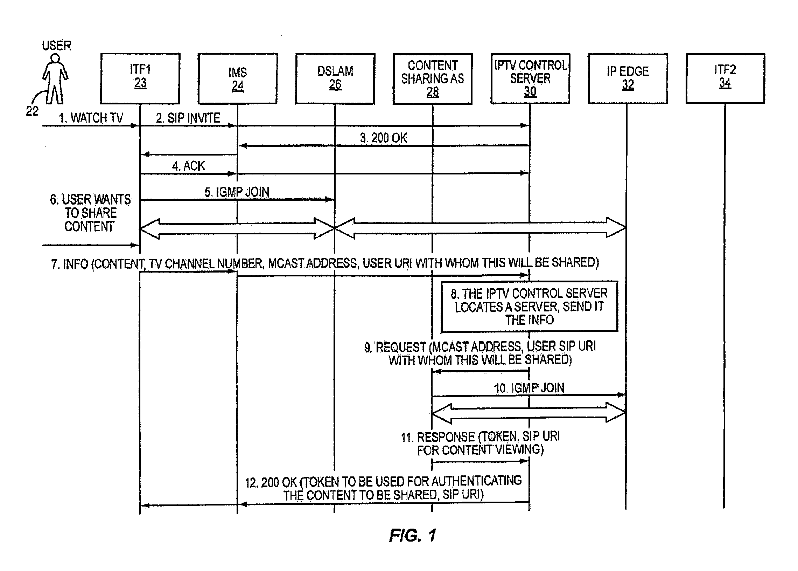

In Figure 1, a first user 22 utilizes the IPTV Terminal Function (ITF) 23 of his User Equipment (UE) to request an IPTV content distribution session, at step 1. At step 2, the ITF 23 sends a SIP INVITE message into the IMS network 24, which routes the message to an IPTV Control Server 30. The IPTV Control Server 30, at step 3, returns a 200 OK acknowledgment, which the IMS network 24 forwards to the ITF 23. At step 4, the ITF 23 sends an ACK acknowledgment to the IMS 24, which forwards it to the IPTV Control Server 30. The ITF 23 also sends an Internet Group Management Protocol (IGMP) JOIN message to a Digital Subscriber Line Access Multiplexer (DSLAM) 26 at step 5. The ITF 23 then receives content from the IPTV Control Server 30, through the IP EDGE 32, via a DSLAM 26, and it renders for the first user 22.

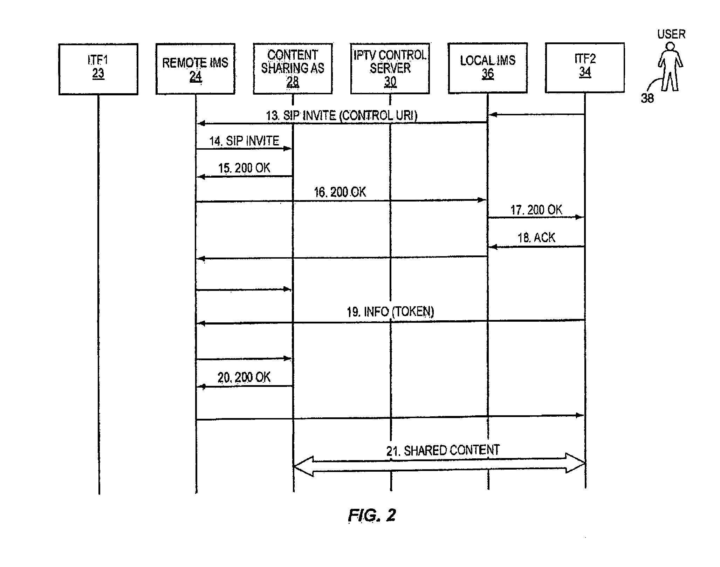

The first user 22 may then decide to share the IPTV content distribution session with a second user 38 (Figure 2). The first user 22 indicates such to the ITF 23 in his UE, at step 6. The ITF 23 sends an INFO message, at step 7, to the IPTV Control Server 30. The INFO message includes an identification of the content, such as the TV channel number, a Mcast address, and a SIP Uniform Resource Identifier (URI) associated with the second user 38. The SIP URI for the second user represents the user IMS public identity. At step 8, the IPTV Control Server 30 locates a Content Sharing Application Server (AS) 28, and sends to it a request including the Mcast address of the IPTV content distribution session and the SIP URI (IMS public identity) associated with the second user 38. The Content Sharing AS 28 joins the session by sending an IGMP JOIN message to the IP Edge 32 at step 10. This enables the Content Sharing AS 28 to receive the IPTV content. The Content Sharing AS 28 then sends a response to the IPTV Control Server 30, at step 11, including a unique authentication token and a SIP URI for accessing the IPTV content. The SIP URI for accessing the content represents an IMS Public Service Identity (PSI). A PSI is essentially a regular IMS identity, but it is intended for services and inherits all the properties of a regular IMS public identity, intended for real IMS users. At this point the content sharing AS establishes a binding between the PSI representing the content, the IMS public identity for the user, and the authentication token. There is preferably a timer associated with that binding to ensure its proper deletion for security reasons when the timer expires. The value of the timer is typically set based on operator policies. At step 12, the IPTV Control Server 30 sends a 200 OK message, including the authentication token and the SIP URL of the content, to the ITF 23.

The first user 22 (having the IMS SIP URI identity associated with the second user 38) then transmits the authentication token and the SIP URI of the content to the second user 38. This information may be sent in a Short Messaging Service (SMS) message, or via a SIP MESSAGE method.

Figure 2 depicts the call flow for the second user 38 to join the IPTV content distribution session of the first user 20. At step 13, the second user sends a SIP INVITE message to the SIP URI (PSI) of the content (received from the first user 22), via his local IMS network 36, which forwards it to the remote IMS network 24. The remote IMS 24 forwards the SIP INVITE message to the Content Sharing AS 28, at step 14. The Content Sharing AS 28 responds with a 200 OK message at step 15, which the remote IMS 24 returns to the local IMS 36 at step 16. At step 17, the local IMS 36 forwards the 200 OK message to the ITF 34 in the UE of the second user 38.

The ITF 34 then sends an acknowledgment ACK to the Content Sharing AS 28, via the local IMS 36 and remote IMS 24, at step 18. Next, the ITF 34 sends to the Content Sharing AS 28 a SIP INFO message including the authentication token receives from the first user 22, at step 19. The Content Sharing AS 28 authenticates the second user 28 using the authentication token, and responds with a 200 OK message at step 20. The Content Sharing AS 28 then shares the IPTV content with the ITF 34, at step 21. Those of skill in the art will recognize that, in a particular implementation, the IPTV content may be routed from the Content Sharing AS 28 through an IP EDGE and DSLAM to the ITF 34, the details of which are omitted for clarity. Both ITFs 23, 34 are now rendering the same IPTV content, and the two users 22, 38 may discuss the IPTV content in real time.

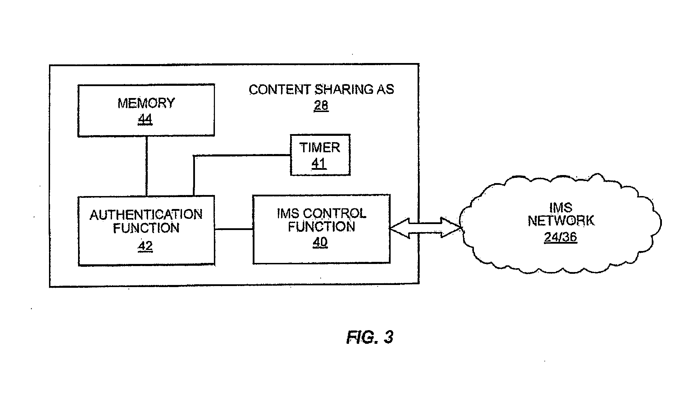

Figure 3 is a functional block diagram of a representative Content Sharing AS 28, depicting functional modules germane to the present invention and omitting other functionality for clarity. The Content Sharing AS 28 includes an IMS Control Function 40 that processes SIP and other protocol messaging to and from the attached IMS network(s) 24, 36. The Content Sharing AS 28 also includes an Authentication Function 42 and memory 44. The Authentication Function 42 is operative to generate a unique authentication token which is sent to the first user 22, and to store the authentication token in memory 44. The Authentication Function 42 is further operative to authenticate the second user 38 by comparing the authentication token received from him to the one in memory 44. A timer function 41 provides a time-out, under the control of the IMS Control Function 40, to terminate the authentication binding, as described previously. The IMS Control Function 40 and the Authentication Function 42 may each be implemented as hard-wired or programmable hardware, software and module is executing on a microprocessor or digital signal processor (DSP), or any combination of hardware, firmware, and software known in the art or to be developed.

The present invention may, of course, be carried out in other ways than those specifically set forth herein without departing from essential characteristic of the invention. The present embodiments are to be considered in all respects as illustrative and not restrictive, and all changes coming within the meaning and equivalency range of the appended claims are intended to be embraced therein.

## Claims

1. A method of sharing a content distribution session of a first user with a second user by a Content Sharing Application Server (AS) in an IP Multimedia Subsystem (IMS), comprising:
- receiving a request to share content with the second user, the request including a Session Initiation Protocol (SIP) Uniform Resource Identifier (URI) associated with the second user;
- sending a response including a SIP URI associated with the Content Sharing AS and an authentication token;
- subsequently receiving a SIP INVITE from the second user;
- receiving the authentication token from the second user;
- authenticating the second user with the authentication token; and
- sharing the IPTV session with the second user if authentication is successful.

2. The method of claim 1 wherein the content distribution session is an Internet Protocol Television (IPTV) session.

3. The method of claim 2 wherein the Content Sharing AS receives a request to share content from an IPTV Control Server in an Internet Group Management Protocol (IGMP) group of the first user.

4. The method of claim 3 wherein the Content Sharing AS receives the request to share content from the IPTV Control Server in response to the IPTV Control Server receiving a request to share content from the first user.

5. The method of claim 1 wherein sending a response including a SIP URI associated with the Content Sharing AS and an authentication token comprises sending the response to the first user.

6. The method of claim 5 wherein sending the response to the first user comprises sending the response to the first user via the IPTV Control Server.

7. The method of claim 1 further comprising establishing a binding between the SIP URI associated with the Content Sharing AS, the SIP URI associated with the second user, and the authentication token.

8. The method of claim 7 further comprising terminating the binding at the earlier of the termination of the shared content distribution session or the expiration of a predetermined duration.

9. A method sharing a content distribution session of a first user with a second user in an IP Multimedia Subsystem (IMS), comprising:
- sending a share request to a content distribution server, the request including an identification of the content to be shared and a Session Initiation Protocol (SIP) Uniform Resource Identifier (URI) associated with the second user;
- receiving a SIP URI associated with a Content Sharing Application Server (AS) and an authentication token; and
- sending the SIP URI associated with the Content Sharing AS and the authentication token to the second user.

10. The method of claim 9 wherein the content distribution server is an Internet Protocol Television (IPTV) Control Server.

11. The method of claim 9 wherein sending the SIP URI associated with the Content Sharing AS and the authentication token to the second user comprises sending the URI and token via Short Messaging Service (SMS).

12. The method of claim 9 wherein sending the SIP URI associated with the Content Sharing AS and the authentication token to the second user comprises sending the URI and token via a SIP MESSAGE.

13. A method sharing a content distribution session of a first user by a second user in an IP Multimedia Subsystem (IMS), comprising:
- receiving from the first user a Session Initiation Protocol (SIP) Uniform Resource Identifier (URI) associated with a Content Sharing Application Server (AS) and an authentication token;
- sending a request to the Content Sharing AS to join the first user's content distribution session;
- sending the authentication token to the Content Sharing AS; and
- receiving content from the Content Sharing AS.

14. The method of claim 13 wherein the content distribution session comprises an Internet Protocol Television (IPTV) session.

15. A Content Sharing Application Server (AS) in an IP Multimedia Subsystem (IMS) comprising:
- memory;
- an IMS controller operative to process Session Initiation Protocol (SIP) messages and further operative to receive from a first user a SIP Uniform Resource Identifier (URI) associated with a second user and to receive from the second user a request to join a content distribution session; and
- an authentication function operative to generate a unique authentication token, associate the token with the second user, store the token in the memory, send the token to the first user, and authenticate the second user by comparing the stored token to an Authentication token subsequently received from the second user.

16. The Content Sharing AS of claim 15, wherein the content distribution session comprises an Internet Protocol Television (IPTV) session.

17. The Content Sharing AS of claim 15 further comprising a timer function operative to prompt termination of a binding between a SIP URI associated with the Content Sharing AS, the SIP URI associated with the second user, and the authentication token after a predetermined duration.

## Patentansprüche

1. Verfahren zum Teilen einer Inhaltsverteilungssitzung eines ersten Benutzers mit einem zweiten Benutzer durch einen Inhaltsteilungs-Anwendungsserver (AS) in einem IP-Multimedia-Subsystem (IMS), umfassend:
- Empfangen einer Anfrage, um Inhalt mit dem zweiten Benutzer zu teilen, wobei die Anfrage einen Sitzungsinitiationsprotokoll (SIP) Einheits-Ressourcen-Identifizierer (URI) beinhaltet, der mit dem zweiten Benutzer verbunden ist;
- Senden einer Antwort, die eine SIP URI, die mit dem Inhaltsteilungs-AS verbunden ist, und einen Authentifikations-Token beinhaltet;
- anschließend Empfangen eines SIP INVITE von dem zweiten Benutzer;
- Empfangen des Identifikations-Tokens von dem zweiten Benutzer;
- Authentifizieren des zweiten Benutzers mit dem Authentifikations-Token; und
- Teilen der IPTV-Sitzung mit dem zweiten Benutzer, wenn Authentifikation erfolgreich ist.

2. Verfahren nach Anspruch 1, wobei die Inhaltsverteilungssitzung eine Internet-Protokoll-Television- (IPVT) Sitzung ist.

3. Verfahren nach Anspruch 2, wobei der Inhaltsteilungs-AS eine Anfrage empfängt, um Inhalt von einem IPTV-Steuerserver in einer Internetgruppen-Verwaltungsprotokoll- (IGMP) Gruppe des ersten Benutzers zu teilen.

4. Verfahren nach Anspruch 3, wobei der Inhaltsteilungs-AS die Anfrage empfängt, um Inhalt von dem IPTV-Steuerserver zu teilen, als Antwort darauf, dass der IPTV-Steuerserver eine Anfrage von dem ersten Benutzer empfängt, um Inhalt zu teilen.

5. Verfahren nach Anspruch 1, wobei Senden einer Antwort, einen SIP URI, der mit dem Inhaltteilen (AS) verbunden ist und einen Authentifikations-Token beinhaltet, umfasst Senden der Antwort an den ersten Benutzer.

6. Verfahren nach Anspruch 5, wobei Senden der Antwort an den ersten Benutzer umfasst Senden der Antwort an den ersten Benutzer mittels des IPTV-Steuerservers.

7. Verfahren nach Anspruch 1, weiterhin umfassend Aufbauen einer Bindung zwischen dem SIP URI, das mit dem Inhaltsteilungs-AS verbunden ist, und dem Identifikations-Token, wobei der SIP URI mit dem zweiten Benutzer verbunden ist.

8. Verfahren nach Anspruch 7, weiterhin umfassend Beenden der Verbindung beim früheren von der Beendigung der geteilten Inhalts-Verteilungssitzung oder dem Ablauf einer vorbestimmten Zeitspanne.

9. Verfahren zum Teilen einer Inhaltsverteilungssitzung von einem ersten Benutzers mit einem zweiten Benutzer in einem IP-Multimedia-Subsystem (IMS), umfassend:
- Senden einer Teilungsanforderung an einen Inhaltsverteilungsserver, wobei die Anfrage eine Identifikation des zu teilenden Inhalts und einen mit dem zweiten Benutzer verbundenen SitzungsInitiationsprotokoll (SIP) einheitlichen Ressourcen-Identifizierer (URI) beinhaltet;
- Empfangen eines SIP URI, die mit einem Inhaltsteilungs-Anwendungsserver (AS) verbunden ist, und einen Authentifikations-Token; und
- Senden des SIP URI, der mit dem Inhaltsteilungs-AS verbunden ist, und des Identifikations-Tokens an den zweiten Benutzer.

10. Verfahren nach Anspruch 9, wobei der Inhaltsverteilungsserver ein Internet-Protokoll-Television- (IPTV) Steuerserver ist.

11. Verfahren nach Anspruch 9, wobei Senden der SIP URI, der mit dem Inhaltsteilungs-AS verbunden ist, und des Authentifikations-Tokens an den zweiten Benutzer, umfasst Senden der URI und des Tokens mittels eines KurzMitteilungsdienstes (SMS).

12. Verfahren nach Anspruch 9, wobei Senden der SIP URI, die mit dem Teilungs-AS verbunden ist, und des Authentifikations-Tokens an den zweiten Benutzer umfasst Senden der URI und des Token mittels einer SIP MESSAGE.

13. Verfahren zum Teilen einer Inhaltsverteilungssitzung eines ersten Benutzers durch einen zweiten Benutzer in einem IP-Multimedia-Subsystem (IMS), umfassend:
- Empfangen von dem ersten Benutzer eines Sitzungs-Initiations-Protokoll (SIP) Einheits-Ressourcen-Identifizierers (URI), der mit einem Inhaltsteilungs-Anwendungsserver (AS) verbunden ist, und eines Identifikations-Tokens;
- Senden einer Anfrage an den Inhaltsteilungs-AS, um an der Inhaltsverteilungssitzung des ersten Benutzers teilzunehmen;
- Senden des Identifikations-Tokens an den Inhaltsteilungs-AS; und
- Empfangen von Inhalt von dem Inhaltsteilungs-AS.

14. Verfahren nach Anspruch 13, wobei die Inhaltsverteilungssitzung eine Internet-Protokoll-Television- (IPTV) Sitzung umfasst.

15. Einen Inhaltsteilungs-Anwendungsserver (AS) in einem IP-Multimedia-Subsystem (IMS), umfassend:
- Speicher;
- einen IMS Controller, der eingerichtet ist, Sitzungs-Initiations-Protokoll- (SIP) Nachrichten zu verarbeiten und weiterhin eingerichtet ist, von einem ersten Benutzer einen SIP-Einheits-Ressourcen-Identifizierer (URI) zu empfangen, der mit einem zweiten Benutzer verbunden ist, und von dem zweiten Benutzer eine Anforderung zu empfangen, um an einer Inhaltsverteilungssitzung teilzunehmen; und
- eine Authentifikationsfunktion, die eingerichtet ist, einen eindeutigen Authentifikations-Token zu erzeugen, den Token mit dem zweiten Benutzer zu verbinden, den Token in dem Speicher zu speichern, den Token an den ersten Benutzer zu senden und den zweiten Benutzer durch Vergleichen des gespeicherten Tokens mit einem nachfolgend von dem zweiten Benutzer empfangenen Autentifikations-Token zu authentifizieren.

16. Der Inhaltsteilungs-AS nach Anspruch 15, wobei die Inhaltsverteilungssitzung eine Internet-Protokoll-Television- (IPTV) Sitzung umfasst.

17. Der Inhaltsteilungs-AS nach Anspruch 15, weiterhin umfassend eine Zeitnahmefunktion, die eingerichtet ist, eine Beendigung einer Bindung zwischen einem SIP URI, der mit dem Inhaltsteilungs-AS verbunden ist, und dem Authentifikations-Token nach einer vorbestimmten Zeitspanne anzuzeigen, wobei die SIP URI mit dem zweiten Benutzer verbunden ist.

## Revendications

1. Procédé de partage d'une session de distribution de contenu d'un premier utilisateur avec un second utilisateur, par un serveur d'application de partage de contenus dans un sous-système multimédia sur IP (IMS), comprenant les étapes consistant à :
- recevoir une demande de partage d'un contenu avec le second utilisateur, la demande incluant un identificateur uniforme de ressource (URI) du protocole d'initialisation de session (SIP) qui est associé au second utilisateur ;
- envoyer une réponse incluant un identificateur URI SIP associé au serveur de partage de contenus et un jeton d'authentification ;
- recevoir ensuite un message INVITE SIP du second utilisateur ;
- recevoir le jeton d'authentification du second utilisateur ;
- authentifier le second utilisateur à l'aide du jeton d'authentification ; et
- partager la session IPTV avec le second utilisateur si l'authentification réussit.

2. Procédé selon la revendication 1, dans lequel la session de distribution de contenu est une session IPTV (Télévision sur protocole internet).

3. Procédé selon la revendication 2, dans lequel le serveur de partage de contenu reçoit une demande de partage de contenu d'un serveur de commande IPTV dans un groupe du protocole de gestion de groupes sur internet (IGMP) du premier utilisateur.

4. Procédé selon la revendication 3, dans lequel le serveur de partage de contenu reçoit la demande de partage de contenu du serveur de commande IPTV en réponse à la réception, par le serveur de commande IPTV, d'une demande de partage de contenu provenant du premier utilisateur.

5. Procédé selon la revendication 1, dans lequel l'étape d'envoi d'une réponse contenant un identificateur URI SIP associé au serveur de partage de contenu et un jeton d'authentification comprend l'étape consistant à envoyer la réponse au premier utilisateur.

6. Procédé selon la revendication 5, dans lequel l'étape d'envoi de la réponse au premier utilisateur comprend l'étape consistant à envoyer la réponse au premier utilisateur via le serveur de commande IPTV.

7. Procédé selon la revendication 1, comprenant en outre l'étape consistant à établir une liaison entre l'identificateur URI SIP associé au serveur de partage de contenu, l'identificateur URI SIP associé au second utilisateur et le jeton d'authentification.

8. Procédé selon la revendication 7, comprenant en outre l'étape consistant à clôturer la liaison au premier des événements suivants : achèvement de la session de distribution de contenu partagé et expiration d'une durée prédéterminée.

9. Procédé de partage d'une session de distribution de contenu d'un premier utilisateur avec un second utilisateur dans un sous-système multimédia sur IP (IMS), comprenant les étapes consistant à :
- envoyer une demande de partage à un serveur de distribution de contenu, la demande incluant une identification du contenu à partager et un identificateur URI SIP associé au second utilisateur ;
- recevoir un identificateur URI SIP associé au serveur de partage de contenus et un jeton d'authentification ; et
- envoyer l'identificateur URI SIP associé au serveur de partage de contenu et le jeton d'authentification au second utilisateur.

10. Procédé selon la revendication 9, dans lequel la session de distribution de contenu est une session IPTV.

11. Procédé selon la revendication 9, dans lequel l'étape d'envoi de l'identificateur URI SIP associé au serveur de partage de contenu et du jeton d'authentification au second utilisateur comprend l'étape consistant à envoyer l'identificateur URI et le jeton par un message SMS (Service de messages courts).

12. Procédé selon la revendication 9, dans lequel l'étape d'envoi de l'identificateur URI SIP associé au serveur de partage de contenu et du jeton d'authentification au second utilisateur comprend l'étape consistant à envoyer l'identificateur URI et le jeton par un MESSAGE SIP.

13. Procédé de partage d'une session de distribution de contenu d'un premier utilisateur par un second utilisateur dans un sous-système IMS, comprenant les étapes consistant à :
- recevoir du premier utilisateur un identificateur URI SIP associé à un serveur de partage de contenu et un jeton d'authentification ;
- envoyer au serveur de partage de contenu une demande de jonction à la session de distribution de contenu du premier utilisateur ;
- envoyer le jeton d'authentification au serveur de partage de contenu ; et
- recevoir le contenu en provenance du serveur de partage de contenu.

14. Procédé selon la revendication 13, dans lequel la session de distribution de contenu est une session IPTV.

15. Serveur de partage de contenu dans un sous-système IMS, comprenant :
- de la mémoire ;
- un contrôleur IMS en mesure de traiter des messages SIP et, en outre, de recevoir d'un premier utilisateur un identificateur URI SIP associé à un second utilisateur et de recevoir du second utilisateur une demande de jonction à une session de distribution de contenu ; et
- une fonction d'authentification en mesure de produire un jeton d'authentification unique, d'associer le jeton au second utilisateur, de stocker le jeton dans la mémoire, d'envoyer le jeton au premier utilisateur et d'authentifier le second utilisateur en comparant le jeton enregistré et un jeton d'authentification reçu ensuite du second utilisateur.

16. Serveur de partage de contenu selon la revendication 15, dans lequel la session de distribution de contenu est une session IPTV.

17. Serveur de partage de contenu selon la revendication 15, comprenant en outre une fonction de comptage du temps en mesure de commander la clôture d'une liaison entre un identificateur URI SIP associé au serveur de partage de contenu, l'identificateur URI SIP associé au second utilisateur et le jeton d'authentification, après une durée prédéterminée.
